# EUROPEAN PATENT APPLICATION

(11) **EP 1 013 953 A1**
(43) Date of publication of application: **28.06.2000**
(21) Application number: 97955099.3
(22) Date of filing: 11.09.1997
(51) Int. Cl.: F16D 31/02, F04B 17/00, F03B 13/10

(54) **MACHINE FOR PRODUCING KINETIC ENERGY**

(71) Applicant: Rego Espinoza, Ismael, Lomas de Chapultepec, México, D.F. 1000 (MX); Rego Garcia de Alba, Luis Felipe, Lomas de Chapultepec, México, D.F. 1000 (MX)
(72) Inventor: Rego Espinoza, Ismael, México, D.F. 11000 (MX); Rego Garcia de Alba, Luis Felipe, México, D.F. 11000 (MX)
(74) Representative: Frohwitter, Bernhard, Dipl.-Ing.
(86) International application number: MX9700029
(87) International publication number: WO9913238

(57) **Abstract**

A machine for producing kinetic energy from sea waves comprising a floater (1), an elongated cable (2), a suctioning and impelling hydraulic pump (3), with a cylinder orifice; a deadweight (4). The floater (1) is fastened to an end of the cable (2) that passes through the orifice of the hydraulic pump (3) anchored to the deadweight (4); an elevator tank (6) for sea water storage located over a natural elevation of the terrain; an elongated pipeline (5) connected on the first end to the pump (3) and the second end to ends inside the tank (6); a second elongate pipeline (7) connected on the first end to the lower part of the tank (6) and on the second end to a hydraulic turbine (8); an electric generator (9) coupled to the hydraulic turbine to generate electricity. The machine further includes a two pulley or tackle system (17), a spindle (18), anchored on firm land, in order to oppose the average level change of the sea surface by the effect of the tide.

## Description

This invention refers to a machine that produces kinetic energy by utilizing ascending and descending movement of sea waves; said kinetic energy may be transformed in electric energy. The machine is essentially comprised of a floater means fastened to the end of a cable means which is fastened at its other end to a piston or plunger of a suctioning and impelling hydraulic pump means anchored to a deadweight located at the bottom of the sea; said floater means, when moving vertically by means of the ascending and descending movement of the sea waves, transmits to the cable means fastened to the hydraulic pump piston or plunger, a force equivalent to its displacement value. The ascending movement of the hydraulic pump piston or plunger simultaneously allows the suction and impelling of large amounts of sea water that, by means of pipelines or houses connected to the hydraulic pump, will be conducted to a storage elevated tank located in a structure built to support the same, or over a natural elevation of the terrain, adjacent to the sea shore. The water will move, taking advantage of its falling force from the height of the storage tank, turbine coupled to generators of electricity.

### FIELD OF THE INVENTION

This invention refers to devices producing kinetic energy and that may convert it in any other type of energy and, more particularly, it is related to a machine producing kinetic energy by using the ascending and descending movement of the sea waves and which can transform this kinetic energy in electric energy. This kinetic energy may also be stored during a predetermined time to convert it later in electric energy.

### BACKGROUND OF THE INVENTION

Nowadays, there is a great number of systems to transform the energy of the tides, such as: those that utilize the different heights among the crests of various consecutive waves, those which produce differential movements between two floaters which are bound together by a joint, a hinge or something similar; those that utilize themselves the kinetic energy of the hard strokes and sea waves, etc., which are difficult, expensive and complex to install and to handle, with the result that it becomes even more complicated when most or all the components of the systems are located at the bottom of the sea. There are also devices or photocells that transform solar energy in electric energy which very often do not function to their maximum capacity because there is little or no sun available. Likewise there are other systems that also utilize the force of the sea, which obviously function only during the periods when that force is produced, and, thus, said systems produce energy available only intermittently.

### OBJECTIVES OF THE PRESENT INVENTION

A first objective of the present invention is to provide a simple, economical, lasting and easy handling machine providing kinetic energy, which may convert it later in electric energy.

A second objective of the invention is to provide a machine that is easy to install and repair and which is comprised of components that are easily available in the market.

A third objective is to provide a machine that will utilize the continuous and ceaseless movement of the sea waves for generating energy that is capable of storing such energy.

A fourth objective is to provide a machine which will operate in places where sea currents may vary and be weak, medium, strong or very strong.

The inventor of the present application by taking in account all these and other non-mentioned disadvantages of the previous art, as well as the objectives of this invention, performed innumerable tests, trials and experiments that led him to develop a machine which produces kinetic energy which later may become on electric energy, or it may be stored and later transformed in electric energy. This machine overcomes all the disadvantages of the previous art and provides for innumerable advantages, which evidently is very important at the engineering part where this invention is included.

The machine of the present invention allows to use from the huge, ceaseless and continually renowable source of energy produced by the ebb and tide of the sea, by transforming the force of this energy in kinetic energy for any number of applications, such as: for generating electric energy, the magnitude thereof depending on the number of buoys or floaters used. For instance, a small buoy whose displacement is equal to 470 gallons (5' diameter) located in the sea with a normal typical movement of the waves, will be able to elevate 20,000 gallons of water per hour 330 feet high, producing an appropriate force of 20 KW/h.

The machine in question stores the energy produced by the continuous and ceaseless ascending and descending movement of the sea waves and allows that energy to be released at the desired time and at the dosified amounts required. Thus, in the case in which the energy is used for generating electric energy, this electric energy generated will be of superior quality with uniform wattage and voltage for all practical uses, will be almost invariable, thus avoiding the use of expensive regulating instruments.

This machine uses simple and inexpensive components which are easily available in common markets, and all of which are installed on dry land, which makes this machine practical, economical as well as easy to handle and to maintain.

### BRIEF DESCRIPTION OF THE DRAWINGS

Figure 1 represents the entire machine from the present invention for producing kinetic energy from the ascending and descending movement of sea waves, to store this kinetic energy and to transform it into electric energy or to transform such kinetic energy almost simultaneously in electric energy.
Figure 2 is a schematic detailed view of the internal operation of the suctioning and impelling hydraulic pump of common use, during its initial phase; and
Figure 3 represents in a detailed schematic form the internal operation of the suctioning and impelling hydraulic pump of common use, during its final phase, wherein the piston or plunger of said hydraulic pump is illustrated in its top end position, at the end of the travel, as well, as the hydraulic pump piston or plunger different valves in their different positions.

### PREFERRED EMBODIMENT OF THE INVENTION

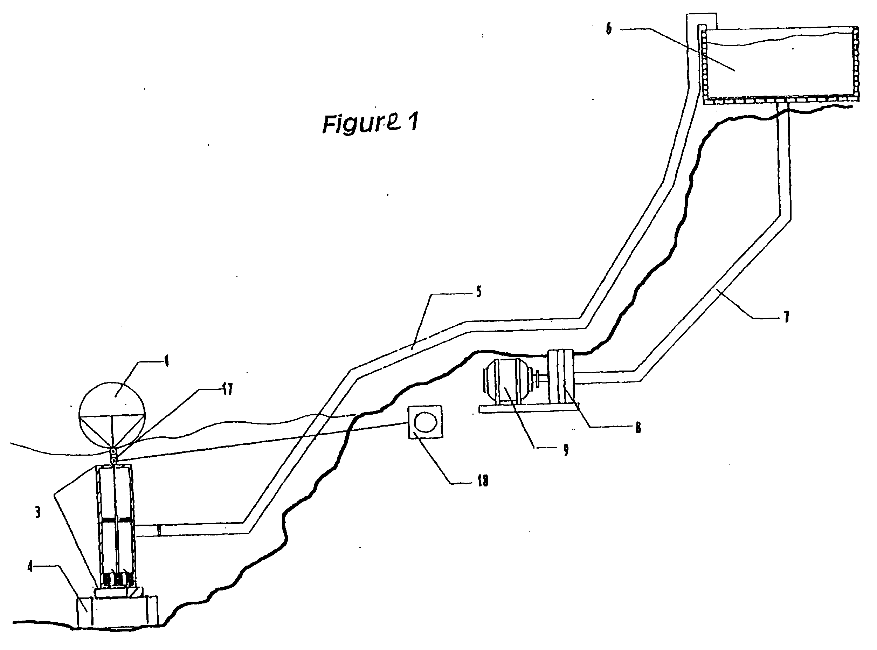

The machine of this subject invention to produce kinetic energy from the ascending and descending movement of sea waves, to store this kinetic energy and transform it in electric energy or to transform this kinetic energy almost simultaneously in electric energy; in the preferred embodiment, Figure 1, is comprised of: one buoy or floater 1; an elongated cable 2; a suctioning and impelling type hydraulic pump 3 with a cylinder orifice; a deadweight 4; the buoy or floater 1 being fastened to an end of the cable means 2 that passes through the cylinder orifice of the hydraulic pump 3 anchored to the deadweight 4 which is deposited at the bottom of the sea; an elongated pipeline 5 connected at the first end to the hydraulic pump 3; a water storage elevated tank 6 located over a structure built with the sole purpose of supporting the tank, or over a natural elevation of the terrain; the other end of the elongated pipeline 5 ends inside the storage elevated tank 6, and said elongated pipeline 5 is used to elevate the sea water until it is deposited inside the deposit of the storage elevated tank 6; an elongated pipeline 7, connected at an end to the lower part of the elevated tank 6; an hydraulic turbine 8 at which is fastened to the elongated pipeline 7 at its other end, said pipeline 7 is used to conduit the water from the elevated tank 6 to hydraulic turbine 8; an electric generator 9 coupled to said hydraulic turbine 8 which, using the water fall, causes the electric generator 9 to operate, resulting in generating electric energy, with uniform and constant power to be used for industry, for the field, for the home, etc.

The elevated tank 6 has a dual function of storing water and, as a consequence, energy, as well as regulating the volume of water fed to the hydraulic turbine, and the number of revolutions that this latter transmits to the electric generator 9 coupled to the hydraulic turbine, allowing the alternating electric energy generated to have uniform and constant cycles.

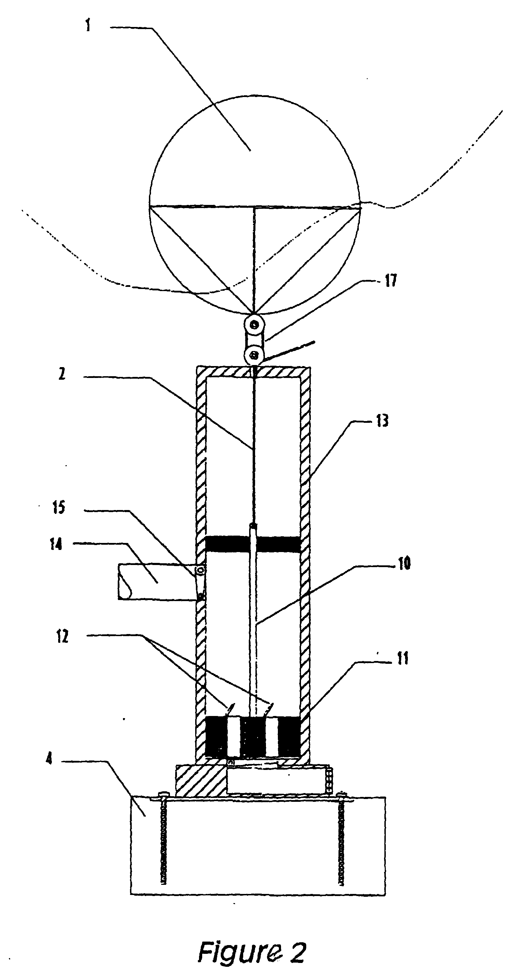

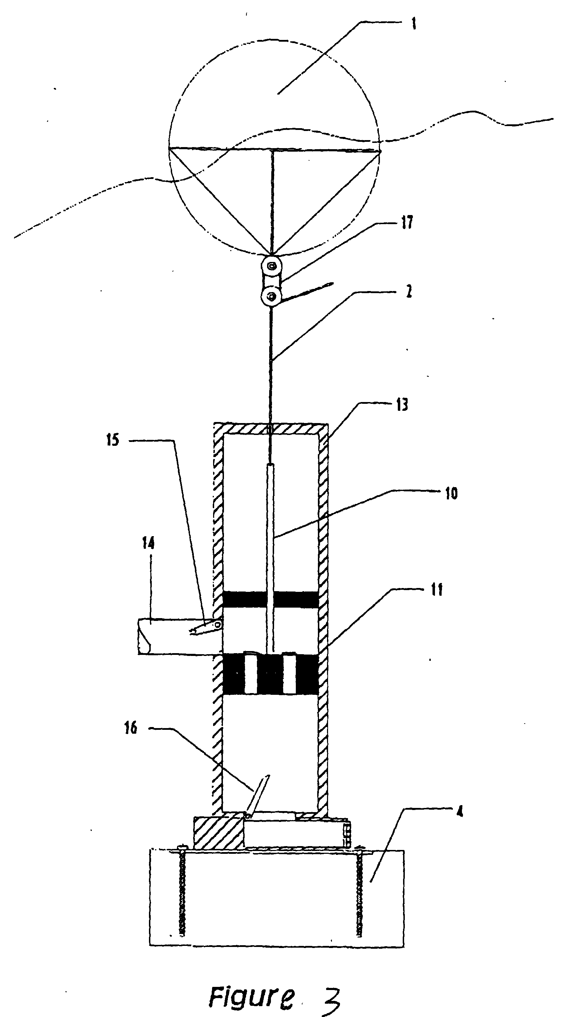

During the internal operation of the suctioning and impelling hydraulic pump 3 of common use, at its initial phase, Figure 2, the buoy or floater 1 is joined by means of the cable 2, to a stem 10 of a plunger or piston 11 of the hydraulic pump 3, at the beginning of the travel, the piston or plunger 11 has orifices where automatically opening and closing valves 12 are housed, when the piston or plunger 11 ascends or descends inside a cylinder 13 which comprises the main body of the hydraulic pump 3, and a tube 14 coupled to the cylinder 13 which also contains an automatically closing valve 15 that restrains the water discharge from the elongated pipeline 5 and which, coupled to the tube 14, allows the transportation of the suctioned water to the elevated tank 6, Figure 1.

During the internal operation of the suctioning and impelling hydraulic pump 3 of common use, at its final phase, Figure 3, the piston or plunger 11 reaches to its top end position, at the end of the travel, and the different valves 12 remain in their respective position, and the sea water is suctioned through an hydraulic pump floodgate 16, the opens at that moment.

### FUNCTIONING OF THE PREFERRED EMBODIMENT OF THE INVENTION

The buoy or floater 1, when impelled by ascending motion of the waves, produces a tension force over the cable 2, of equal magnitude to the displacement of said buoy or floater 1 in the sea water; in the meantime, the cable 2 transmits said force to piston or plunger 11 of, hydraulic pump 3, which causes hydraulic pump 3 to suction sea water when ascending, and to deposit it simultaneously, by means of the elongated pipeline 5, inside the storage elevated tank 6, wherein this sea water may be stored during a predetermined period of time and then it may be emptied in a controlled way by means of the elongated pipeline 7, or said sea water, when reaching elevated tank 6 may be emptied automatically in a controlled manner by means of said pipeline 7 which feeds said sea water to hydraulic turbine 8, producing to said hydraulic turbine 8 rotating movement which causes electric generator 9 generates electric energy with uniform and constant wattage to be used for industry, for the field, for the home, etc.

The buoy or floater 1, when impelled by descending movement of the waves, ceases to exercise tension effort over the cable 2 to which is linked, so that the piston or plunger 11, used as counterweight, descends into the cylinder 13 of the hydraulic pump 3, so that the sea water enters through the orifices or the valves 12 located in the piston or plunger 11, thus filling with sea water the cylinder 13 of the hydraulic pump 3, waiting to be impelled towards elevated tank 6 by the piston or plunger 11 ascending action, thus, a new system operative cycle can alternatively restart.

In order to oppose the effects of the tide, that in this case, when modifying the average level of the sea surface increases or decreases the tension exercised by the ascending force of buoy or floater 1 over the piston or plunger 11 of the hydraulic pump 3, the cable 2 that links them, could be elongated or shortened proportionally by means of a two pulley or tackle system 17 placed, one fastened to the buoy or floater 1, and the other one, to the piston or plunger 11 of the hydraulic pump 3, said two pulley or tackle system 17 is controlled by means of a spindle 18 located at the beach, the spindle 18 can be propelled by a manual or automatic mechanical-electrical system.

It will be obvious to those experts in this art that there are any number of changes and modifications of the invention that may be done, without depriving the scope and reach of the same, as is described in the following claims.

## Claims

1. Machine for producing kinetic energy from ascending and descending movement of sea waves, for storing said kinetic energy and for transforming it into electric energy or for converting said kinetic energy almost simultaneously into electric energy; said machine comprising: a buoy or floater means; an elongated cable means; an hydraulic pump means with one cylinder orifice; a deadweight which is deposited at the bottom of the sea; said buoy or floater means being held to one end of the cable means, said cable means is passed through the cylinder orifice of the hydraulic pump means anchored to a deadweight; a first elongated pipeline means connected on one of its ends to the hydraulic pump means; a water storage elevated tank for storing and distributing sea water located over a tank support structure or over a natural elevation of the terrain, said first pipeline means being connected or submerged on its other end in the elevated tank and being used to elevate the sea water until it is deposited inside the elevated tank deposit; a second elongated pipeline means connected, on an end to the elevated tank lower part; an hydraulic turbine means, in which is connected on its other end to the second pipeline means for conducting sea water from the elevated tank to the hydraulic turbine means; an electric generator means for generating electric energy, said electric generator is coupled to the hydraulic turbine means which, using the sea water fall provided by the second pipeline means, in order to cause that the electric generator means to function and produce thus electric energy, with uniform and constant wattage for multiple uses.

2. Machine for producing kinetic energy, according to claim 1, wherein: the buoy or floater means is a buoy or floater; the cable means is a cable; the hydraulic pump means is a suctioning and impelling hydraulic pump; the first and second elongated pipeline means are a first and second elongated pipelines; the hydraulic turbine means is an hydraulic turbine; and the electric generator means is an electric generator.

3. Machine for producing kinetic energy, according to claims 1 and 2, wherein the suctioning and impelling hydraulic pump has a cylinder inside which is a piston or plunger with a stem, the piston or plunger having orifices in which automatically opening and closing valves are housed.

4. Machine for producing kinetic energy, according to claims 2 and 3, wherein the cylinder has coupled to the same a tube comprising an automatically closing valve that restrains the water discharge from the first pipeline and which, coupled to the tube, allows the transportation of the suctioned water to the elevated tank.

5. Machine for producing kinetic energy, according to any of aforementioned claims, wherein the elevated tank is used for storing sea water and, as a consequence, its energy, as well as for regulating the volume of sea water that is fed to the hydraulic turbine, and the number of revolutions that said hydraulic turbine transmits to the electric generator.

6. Machine for producing kinetic energy, according to any of aforementioned claims 1 to 5, wherein, during the internal operation of the hydraulic pump, at its initial phase, the buoy or floater is joined by means of the cable, to a plunger or piston stem of said hydraulic pump, at the beginning of the travel, restraining by means of the closing valve the water discharge from the first pipeline, and when said valve is coupled to the tube, allows the transportation of the suctioned water to the elevated tank, by means of said first pipeline.

7. Machine for producing kinetic energy, according to any of aforementioned claims 1 to 5, wherein, during the internal operation of the hydraulic pump, at its final phase, the piston or plunger reaches to its top end position, at the end of the travel, and the different piston or plunger valves remain in their respective positions, and the sea water is suctioned through an hydraulic pump floodgate, that opens at that moment.

8. Machine for producing kinetic energy, according to any of aforementioned claims, wherein the buoy or floater, when impelled by ascending motion of the waves, produces a tension force over the cable of equal magnitude to the displacement of the buoy or floater in the sea water; in the meantime, the cable transmits said force to hydraulic pump piston or plunger; which causes hydraulic pump to suction the sea water when ascending, and to deposit it simultaneously, by means of the first elongated pipeline, inside the elevated storage tank, wherein this sea water may be stored during a predetermined period of time and then it may be emptied in a controlled way by means of the second pipeline, which feeds said sea water to the hydraulic turbine, producing rotating movement which causes the electric generator to function and to produce electric energy with uniform and constant wattage.

9. Machine for producing kinetic energy, according to any of claims 1 to 7, wherein the buoy or floater, when impelled by descending movement of the waves, ceases to exercise tension effort over the cable, so as to allow that the piston or plunger, used as counterweight, descends into the hydraulic pump cylinder, in order that the sea water enters through the valves orifices located in the piston or plunger, filling with sea water the hydraulic pump cylinder, waiting to be impelled towards the elevated tank by the piston or plunger ascending action.

10. Machine for producing kinetic energy, according to any of the aforementioned claims; wherein said machine also includes a two pulley or tackle system to elongate or shorten the cable, controlled by means of a spindle located at the beach, in order to oppose the effects of the tide, causing an increases or decreases in the tension exercised by the ascending force of the buoy or floater over the hydraulic pump piston or plunger.

11. Machine for producing kinetic energy, according to claim 10, wherein one of the pulleys is fastened to the cable which passes through the buoy or floated, and, the other pulley is fastened to the piston or plunger of the hydraulic pump, and wherein said two pulley or tackle system can be propelled by a manual or automatic mechanical-electrical system.
